# EUROPEAN PATENT APPLICATION

(11) **EP 2 613 272 A1**
(43) Date of publication of application: **10.07.2013**
(21) Application number: 11821229.9
(22) Date of filing: 25.03.2011
(51) Int. Cl.: G06F 17/30, G06Q 10/00, G09B 29/10

(54) **ELECTRONIC MAP DATA PROCESSING SYSTEM**

(30) Priority: 31.08.2010 JP 2010193315
(71) Applicant: Kabushiki Kaisha Toshiba, Minato-ku Tokyo 105-8001 (JP); Toshiba Solutions Corporation, Tokyo 105-8001 (JP)
(72) Inventor: OMURA, Tsuyoshi, Tokyo 105-8001 (JP); UEMATSU, Takeshi, Tokyo 105-8001 (JP); TAKAHASHI, Koji, Tokyo 105-8001 (JP); SOMAKI, Kazuo, Tokyo 105-8001 (JP)
(74) Representative: Vossius & Partner
(86) International application number: PCT/JP2011/001752
(87) International publication number: WO 2012/029204

(57) **Abstract**

[PROBLEM] To provide an electronic map data processing system achieving preferable matching of an electronic map with customer information owned by a company or the like.

[SOLVING MEANS] An electronic map data processing system includes a mobile terminal apparatus including a GPS control apparatus obtaining coordinate information of a current position, producing visit check information based on an input operation made by a user at each visit destination point, and producing traveling path information including the produced visit check information and coordination information of the visit destination point associated with each other, a storage apparatus storing route data including pieces of address information relating to the visit destination points associated with each other in a predetermined visit sequence and map data including coordinate information of an object displayed on a map, and a control apparatus matching the visit check information of the traveling path information with the route data in order of the predetermined visit sequence to associate the object matched with the coordinate information of the traveling path information with the address information.

## Description

### [TECHNICAL FIELD]

Embodiments of the present invention relate to an electronic map data processing system in which customer information owned by a company or the like is associated with an electronic map.

### [BACKGROUND ART]

There have conventionally been techniques of linking customer information owned by a company or the like to an electronic map to make use of the customer information owned by the company or the like. This type of technique involves address matching processing of associating the address information of the customer information owned by the company with address information or nameplate information provided as attribute information of a building polygon displayed on the electronic map.

The address matching processing typically includes comparison between the address information pieces on a textual basis. To improve the accuracy of the matching rate, it is known that pre-processing (cleansing processing) is performed to make conversion or the like of the address information on the electronic map and the address information of the customer information owned by the company or the like into a common data format (common address data system).

### [PRIOR ART DOCUMENTS]

### [PATENT DOCUMENTS]

Japanese Patent Laid-Open No. 2010-54948

### [DISCLOSURE OF THE INVENTION]

### [PROBLEMS TO BE SOLVED BY THE INVENTION]

It is an object of the present invention to provide an electronic map data processing system capable of achieving preferable matching of an electronic map with customer information owned by a company or the like.

### [MEANS FOR SOLVING THE PROBLEMS]

An electronic map data processing system according to an embodiment includes a mobile terminal apparatus including a GPS control apparatus obtaining coordinate information of a current position, producing visit check information based on an input operation made by a user at each of visit destination points, and producing traveling path information in which the produced visit check information and coordination information of the visit destination point are associated with each other, a storage apparatus storing route data in which pieces of address information relating to the visit destination points are associated with each other in a predetermined visit sequence and map data including coordinate information of an object displayed on a map, and a control apparatus matching the visit check information of the traveling path information with the route data in order of the predetermined visit sequence to associate the object matched with the coordinate information of the traveling path information with the address information.

### [BRIEF DESCRIPTION OF THE DRAWINGS]

Fig. 1 is a block diagram showing the configuration of an electronic map data processing system according to a first embodiment.
Fig. 2 shows tables illustrating an example of information owned by a company in the first embodiment, in which Fig. 2 (a) shows customer information and Fig. 2 (b) shows customer route data.
Fig. 3 (a) shows an example of electronic map information and Fig. 3(b) shows an example of building polygon data in the first embodiment.
Fig. 4 shows an example of traveling path information in the first embodiment.
Fig. 5 is a schematic diagram showing an example of visit check information in the first embodiment.
Fig. 6 shows an example of matching processing in the first embodiment.
Fig. 7 shows information after the matching processing in the first embodiment, in which Fig. 7 (a) shows an example of matched electronic map data and Fig. 7(b) shows an example of customer information.
Fig. 8 shows an example of a screen on which the electronic map obtained through the GIS or the like is displayed when the customer information and the electronic map data are associated with each other in the first embodiment.
Fig. 9 is a flow chart showing a processing flow in a mobile terminal apparatus of the first embodiment.
Fig. 10 is a flow chart showing a processing flow in the electronic map data processing system of the first embodiment.
Fig. 11 shows a modification of the first embodiment, in which Fig. 11 (a) shows an example of address matched electronic map data and Fig. 11(b) shows an example of traveling path information.
Fig. 12 shows an example of matching processing in the modification of the first embodiment.
Fig. 13(a) shows an example of address information displayed in a display of a mobile terminal apparatus in a second embodiment and Fig. 13 (b) shows an example of traveling path information.
Fig. 14 is a flow chart showing a processing flow in the mobile terminal apparatus in an electronic map data processing system of the second embodiment.
Fig. 15 shows an example of matching processing in the second embodiment.
Fig. 16 is a flow chart showing a processing flow in the electronic map data processing system in the second embodiment.

### [BEST MODE FOR CARRYING OUT THE INVENTION]

Embodiments of the present invention will hereinafter be described with reference to the accompanying drawings.

An example of an electronic map data processing system according to embodiments is a computer system which performs matching processing of an electronic map obtained through the GIS (Geographic Information System) or the like with customer information owned by a company or the like in associating the electronic map with the customer information and displaying the customer information on the electronic map to make use of the customer information.

Specifically, the system performs the matching processing of associating particular coordinate information on the electronic map (for example, coordinate information of a map object such as a building polygon displayed on the map) with the customer information owned by the company or the like to produce electronic map data having the customer information owned by the company or the like associated therewith (matching information including the relationally connected electronic map data and customer information).

The electronic map data processing system according to embodiments performs the matching processing by using customer route data including customer information pieces associated in a predetermined sequence and traveling path information provided by a visitor actually (in practice) visiting the addresses included in the customer information in the sequence shown in the customer route data, thereby associating the coordinate information on the electronic map with the customer information owned by the company or the like.

### (First Embodiment)

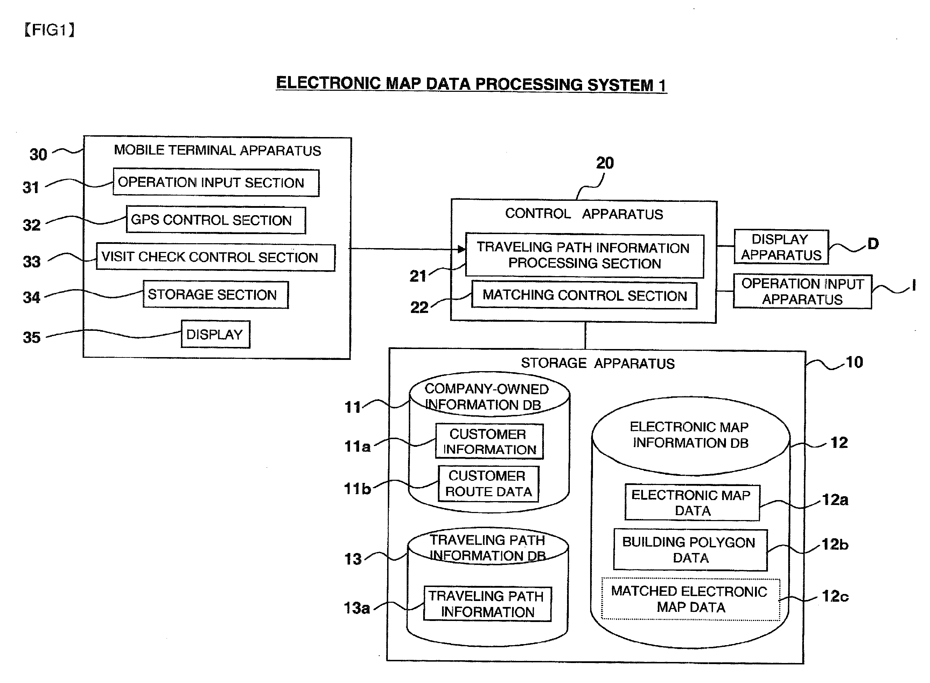

Fig. 1 to Fig. 12 show a first embodiment. Fig. 1 is a block diagram showing the configuration of the electronic map data processing system according to an embodiment. As shown in Fig. 1, the electronic map data processing system 1 according to the present embodiment includes a storage apparatus 10, a control apparatus 20, and a mobile terminal apparatus 30. The control apparatus 20 may include a display apparatus D such as a liquid crystal display and an operation input apparatus I such as a mouse and a keyboard. The control apparatus 20 may also include a display control section which controls display of various types of information on the display apparatus D, an operation input control section which controls an input operation for the operation input apparatus I, an output means such as a printer and a speaker, an input means such as a scanner and an OCR and the like (not shown).

The storage apparatus 10 includes a company-owned information database 11 which stores customer information 11a and customer route data 11b owned by a company or the like and an electronic map information database 12 which stores electronic map data 12a providing electronic map information obtained through the GIS or the like and building polygon data 12b about building polygons displayed on the electronic map.

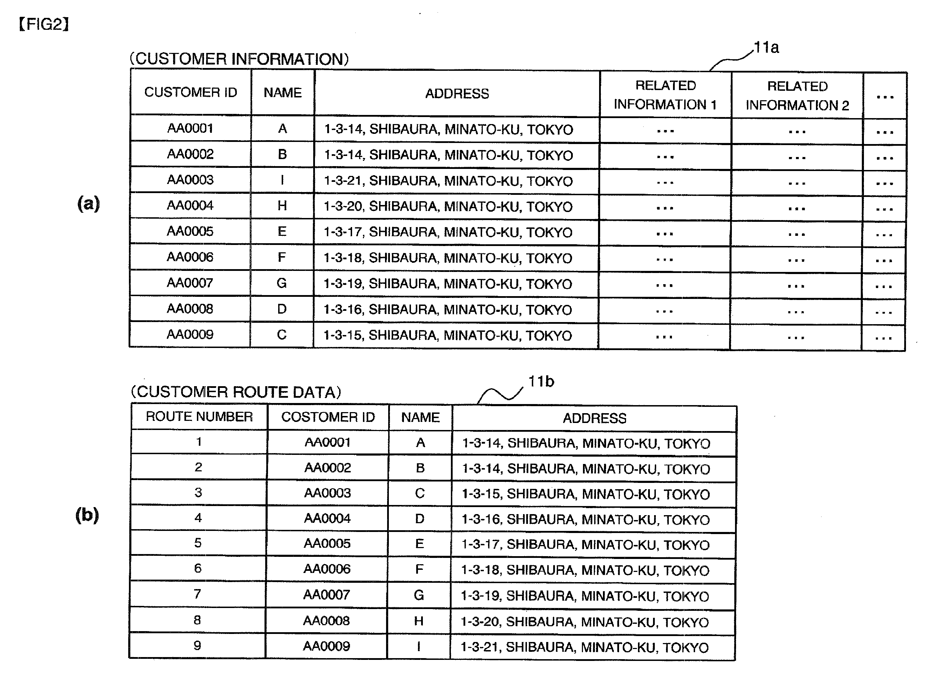

As shown in Fig. 2(a), the company-owned information database 11 stores the customer information 11a including customer IDs, name information, address information, and customer related information, and the customer route data 11b having the customs in the customer information 11a associated with each other in a predetermined sequence.

The customer route data 11b is the information having visited points (address information relating to the visited points) associated with each other in the predetermined visiting sequence, and for example, is formed to include route numbers indicating the sequence of deliveries to a plurality of houses or buildings in newspaper delivery, mail delivery or the like, or the sequence of visits to customs in sales activities or the like, customer IDs, customer names and addresses. The customer route data 11b is relationally associated with the customer information 11a by using those customer IDs, addresses, and names and the like as keys. The route numbers in the customer route data 11b are the information "1, 2, 3 ... " which indicate as the numbers the sequence of deliveries or visits to the houses or the buildings in the plurality of delivery destinations or customs. The customer information pieces 11a are associated with each other by the serial numbers (route number) based on this sequence.

The route numbers in the customer route data 11b are the predefined information based on a predetermined rule in sequentially visiting the plurality of houses or buildings (such as counterclockwise visits to the houses along streets). For example, in view of the efficiency in sequentially visiting the plurality of houses or buildings, the sequence of visits to the plurality of houses or buildings can be determined as the route numbers in accordance with the predetermined rule based on an empirical rule, the distance between the plurality of houses or buildings to be visited, the traveling distance of the visitor and the like.

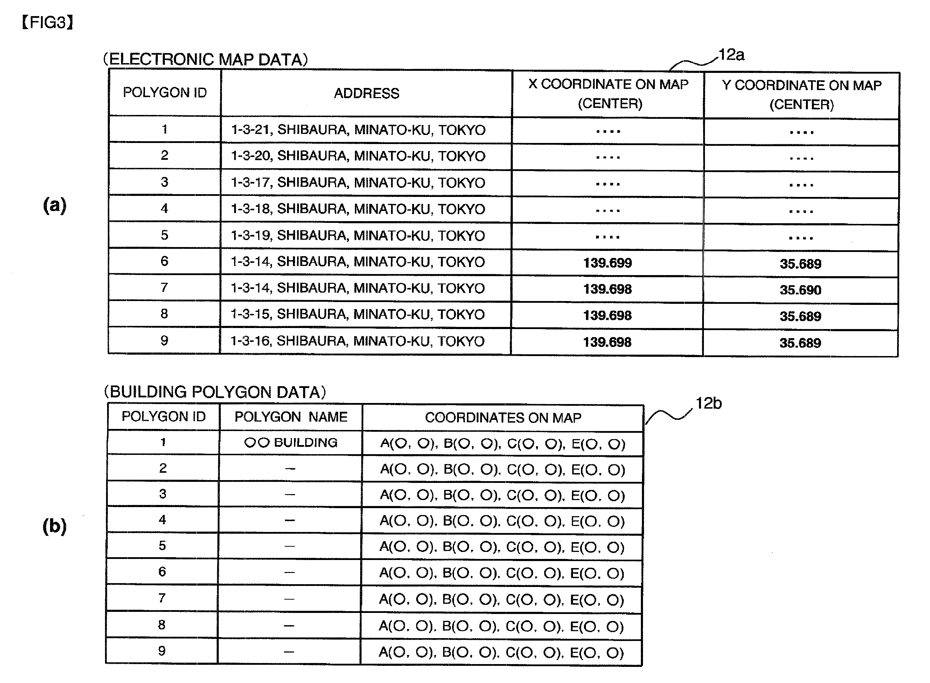

As shown in Fig. 3(a), the electronic map information database 12 stores the electronic map data 12a including the polygon IDs of the building polygons, the addresses thereof, the X coordinates and the Y coordinates of the building polygons on the electronic map. In the example on Fig. 3 (a), the X coordinates and the Y coordinates indicating the central coordinates of the building polygons are held.

Fig. 3 (b) shows an example of the building polygon data 12b. The polygon refers to a map object displayed on the electronic map and is the information which represents a particular area on the electronic map formed of coordinate information based on the coordinate system of the electronic map (latitudes and longitudes). The polygon can include a plurality of pieces of coordinate information. For example, a building polygon having a square shape consists of polygon data having coordinate information about four points at the corners thereof. The building polygon data 12b stores a polygon name (such as a building name and an apartment name) and a plurality of pieces of coordinate information constituting the building polygon for each polygon ID uniquely provided for each building polygon data piece. It should be noted that the electronic map data 12a can include various polygons such as street polygons and partition polygons displayed on the electronic map and other map information (such as names including street names and building names, traffic information, and guidance information) in addition to the building polygons.

The electronic map data processing system 1 according to the present embodiment associates predetermined coordinates of a map object, for example barycentric coordinates or central coordinates of the building polygon, as particular coordinate information on the electronic map with the customer information, or associates all or some of the coordinates included in the building polygon with the customer information.

The mobile terminal apparatus 30 includes an input operation section 31 such as operation keys and input keys, a GPS (Global Positioning System) control section (GPS control apparatus) 32 which communicates with the GPS to obtain the position information of the mobile terminal apparatus 30 (visitor position information), a visit check control section 33 which produces visit check information associating the current position information with the position information of the visited house or building based on the input operation performed by the visitor to produce the traveling path information, a storage section 34 such as a memory including a removable storage medium, and a display 35 such as a display apparatus.

The mobile terminal apparatus 30 is a portable terminal apparatus such as a cellular phone and a PDA (Personal Digital Assistant) and has the function of communicating with the GPS and a computing function. The mobile terminal apparatus 30 includes a portable personal computer such as a notebook computer and a dedicated mobile terminal apparatus produced exclusively for the electronic map data processing system 1.

The GPS control section 32 performs position information control including communicating with the GPS in response to the input operation through the input operation section 31 or the like used as a trigger to obtain GPS coordinate data information as the position information about the current position of the visitor (the current position of the mobile terminal apparatus 30). The position information can be automatically and successively obtained at predetermined time intervals at any time, or the coordinate information about the current position can be obtained each time a predetermined operation or processing is performed, for example, by communicating with the GPS in response to reception of a request to obtain the position information. The GPS control section 32 provides serial numbers as sequence numbers for the obtained position information on the time series and stores the information in the storage section 34.

When the visitor visits the pertinent addresses in the sequence of the route numbers based on the customer route data 11b shown in Fig. 2(b), the visit check control section 33 produces the visit check information for a visit check input operation performed at the visited address point (including an indoor point, an outdoor point, and its vicinity) and stores the visit check information in the storage section 34. The visit check control section 33 produces the traveling path information in which the produced visit check information is associated with the position information obtained at the time of the visit check input operation obtained by the GPS control section 32.

The visit check information is the sequence information provided by numbering the visited addresses based on the sequence of the route numbers in the customer route data 11b, and corresponds to a visit number incremented by one each time the visitor performs the visit check input operation through the input operation section 31.

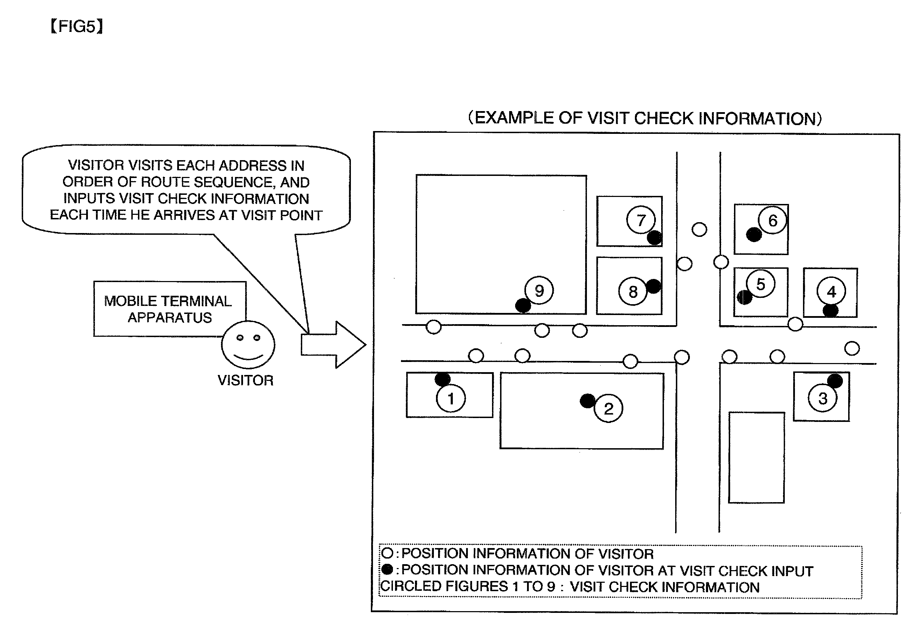

Fig. 5 is a diagram showing an example of the visit check information. As shown in Fig. 5, the visitor carrying the mobile terminal apparatus 30 visits the pertinent addresses in the sequence of the route numbers based on the customer route data 11b. The visitor performs the visit check input operation on the mobile terminal apparatus 30 each time the visitor arrives at an indoor point, an outdoor point, or the vicinity of a visit destination. In response to the visit check input operation, the visit check control section 33 determines the counter value (serial number) of the visit check information, and produces "one" as the visit check information (circled figure "one" in Fig. 5) when it is determined that the visitor visits the first address and performs the visit check input operation there. Next, the visitor visits the second address in the sequence of the route numbers in the customer route data 11b and performs the visit check input operation. The visit check control section 33 produces "two" as the visit check information. Then, the visitor performs the visit check input operation at each of the sequentially visited addresses, and the visit check control section 33 produces the serial numbers of "three, " "four, " "five, " ..., as the visit check information for the respective visit check input operations.

Since the visit check information in the present embodiment is the visit numbers provided in the visit sequence when the visitor visits the pertinent addresses based on the sequence of the route numbers in the customer route data 11b, the route numbers in the customer route data 11b are identical to the visit numbers in the visit check information. Specifically, when the visitor visits the address having the route number "one" which is the first in the sequence of the route numbers in the customer route data 11b and performs the visit check input operation, the visit number "one" is produced as the visit check information, and then when the visitor moves from the address point having the route number "one" to visit the address having the route number "two" and performs the visit check input operation, the visit number "two" is produced as the visit check information. In this manner, the sequence of the visit numbers in the visit check information corresponds to the sequence of the route numbers in the customer route data 11b.

The visit check control section 33 further performs the processing of associating the produced visit check information with the position information of the visitor who visits the pertinent address. For example, when the visitor visiting the pertinent address performs the visit check input operation, the visit check control section 33 produces the traveling path information having the produced visit check information associated with the position information. In the example of Fig. 5, each black circle represents the position information obtained at the time of the visit check input operation or the latest position information in the visit check input operation, and the position information corresponding to the black circle is associated with the produced visit check information. It should be noted that the GPS control section 32 and the visit check control section 33 may be formed into an integral unit, and for example, the visit check control section 33 may be responsible for the processing of the GPS control section 32 to obtain the position information, produce the visit check information, and produce the traveling path information 13a having the position information and the visit check information associated with each other.

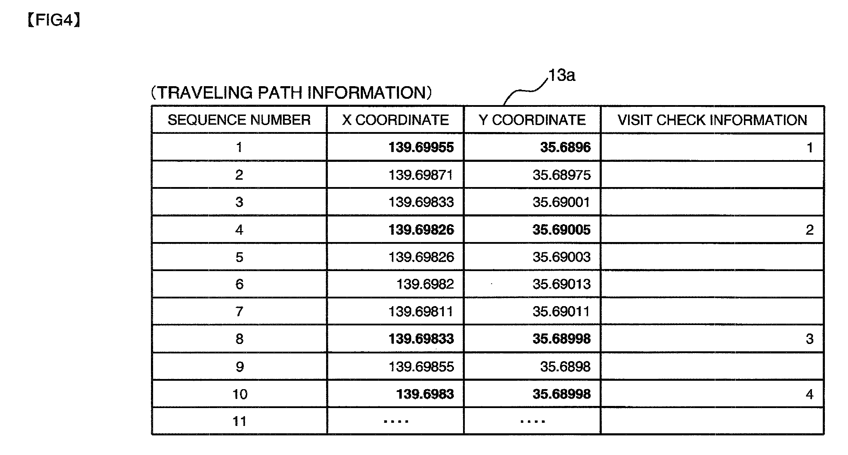

Fig. 4 is a diagram showing an example of the traveling path information. The traveling path information in the present embodiment includes the position information (X coordinates and Y coordinates) obtained through the GPS control section 32 and the visit check information. The X coordinates and the Y coordinates of the position information are represented in the coordinate system of the GPS (latitudes and longitudes), and the coordinate system on the electronic map is identical to the coordinate system of the GPS (the X coordinate values and the Y coordinate values of the traveling path information are used as the X coordinate values and the Y coordinate values on the electronic map, respectively, without any change). In the example of Fig. 5, each white circle represents the position information with which any visit check information is not associated, that is, the position information of the visitor (traveling path) present somewhere from one address to another address in the sequence of the route numbers in the customer route data 11b, and corresponds to the position information of the visitor present somewhere between the coordinate information pieces with which the visit check information is associated.

When the visit check input operation is performed, the visit check control section 33 can output a request to obtain the position information to the GPS control section 32 and associate the latest position information at the time of the visit check input operation obtained through the GPS control section 32 with the produced visit check information to produce the traveling path information. Alternatively, the visit check control section 33 can reference the position information obtained by the GPS control section 32 at the predetermined time intervals at any time and stored in the storage section 34 and associate the latest position information at the time of the visit check input operation with the produced visit check information to produce the traveling path information.

The control apparatus 20 includes a traveling path information processing section 21 and a matching control section 22. The traveling path information processing section 21 is an input interface for the traveling path information 13a produced (collected) by the mobile terminal apparatus 30 and performs the data processing of taking the traveling path information 13a from the mobile terminal apparatus 30 and storing the taken traveling path information 13a in the storage apparatus 10. The control apparatus 20 and the mobile terminal apparatus 30 can be connected to each other through a predetermined communication channel. When the storage section 34 of the mobile terminal apparatus 30 is a removable storage medium, the traveling path information processing section 21 serves as an input interface for the storage section 34 removed from the mobile terminal apparatus 30 to allow the recording medium to be connected to the control apparatus 20. The mobile terminal apparatus 30 and the control apparatus 20 can also be connected to each other through a communication network such as the Internet such that the traveling path information 13a can be input to the control apparatus 20 through the communication network.

The matching control section 22 performs the matching processing of associating the electronic map data 12a with the customer information 11a by using the electronic map data 12a, the building polygon data 12b, the customer route data 11b, and the traveling path information 13a. The timing to perform the matching processing is arbitrarily set. For example, the matching processing can be performed at the time when the traveling path information is input, at the time scheduled at a predetermined point in time, or at the time when an instruction to perform the matching processing is issued through the operation input apparatus I.

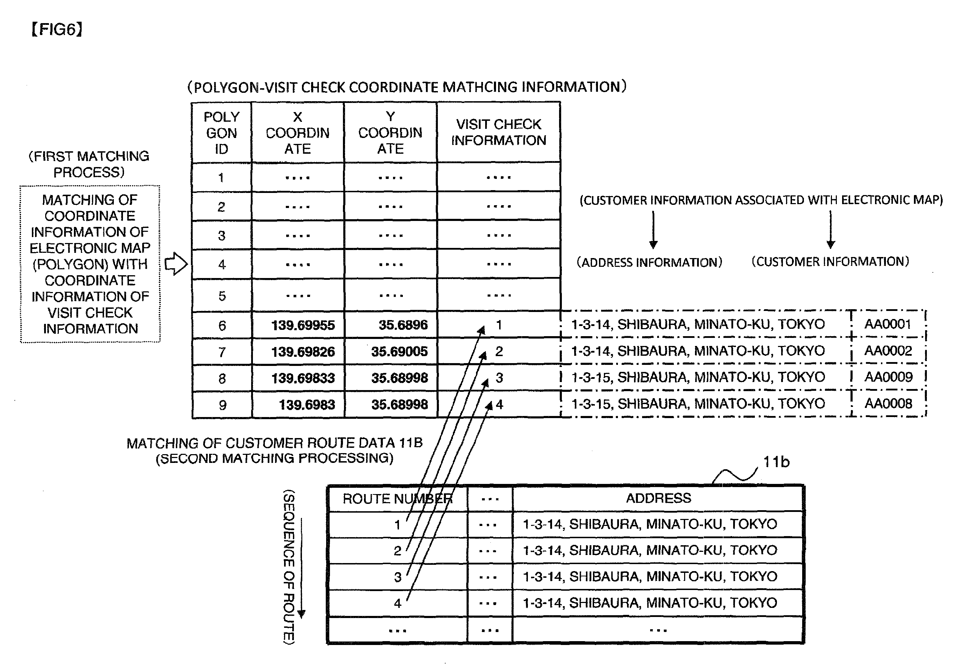

Fig. 6 is a diagram showing an example of the matching processing. The matching processing in the present embodiment includes first matching processing and second matching processing and involves the processing of matching the visit check information of the traveling path information 13a with the customer route data 11b in order of the sequence of visits and associating the object on the electronic map matched with the coordinate information of the traveling path information with the address information of the customer route data 11b (customer information 11a).

The first matching processing includes matching the coordinate information of the traveling path information 13a input through the mobile terminal apparatus 30 with the coordinate information of the building polygon in the electronic map data 12a to associate the coordinate information of the traveling path information 13a with the coordinate information of the building polygon. The matching control section 22 determines whether or not the coordinate information (X coordinate, Y coordinate) assigned the visit check information included in the traveling path information 13a is identical to the central coordinate information (X coordinate, Y coordinate) of the building polygon or is included in the building polygon area provided by connecting the corners of the building polygon formed of a plurality of coordinate information pieces, and thus performs the association of the coordinate information assigned the visit check information with the building polygon.

The example of Fig. 6 shows the results of the matching processing of the coordinate information assigned the visit check information with the coordinate information of the building polygon (polygon-visit check coordinate matching information), and the polygon ID is associated with the coordinate information assigned the visit check information.

The first matching processing can be performed such that supplementary coordinate information is applied to match the coordinate information assigned the visit check information with the building polygon. For example, when the polygon shown in Fig. 2 (b) is formed of a plurality of coordinate information pieces, surrounding coordinates within a range of several meters of the coordinate information of each corner of the polygon can be set as the supplementary coordinate information for the building polygon. The matching control section 22 can determine whether or not the X coordinate and the Y coordinate assigned the visit check information are included in the supplementary coordinate area based on the coordinate information of the building polygon to match the building polygon set in the supplementary coordinate area with the X coordinate and the Y coordinate assigned the visit check information. The supplementary information is not limited thereto, and for example, surrounding coordinates within a radius of N meters of the central coordinates of the building polygon can be set as the supplementary coordinate information for the building polygon, or surrounding coordinates within a range of several meters of the edge of the building polygon figure produced by connecting a plurality of coordinate information pieces can be set as the supplementary coordinate information for the building polygon. In addition, the supplementary coordinate information may be held previously in the storage apparatus 10 for each building polygon, or the supplementary coordinate information may be calculated on the basis of supplementary coordinate conditions previously held in the storage apparatus 10 (for example, surrounding coordinates within a range of several meters of the coordinate information of each corner) while the first matching processing may be performed.

After the matching of the coordinate information assigned the visit check information with the building polygon, the matching control section 22 performs the second matching processing by using the customer route data 11b and the visit check information of the traveling path information 13a.

As described above, since the visit check information of the traveling path information 13a is the sequence information provided by numbering the visited addresses based on the sequence of the route numbers in the customer route data 11b, the route numbers in the customer route data 11b correspond to the sequence of the visit numbers (serial numbers) in the visit check information. Thus, the matching control section 22 references the customer route data 11b and matches the visit check information in the polygon-visit check coordinate matching information with the route number in the customer route data 11b to associate the customer route data 11b, that is, the customer information 11a with the polygon ID on the electronic map associated with the visit check information in the first matching processing.

As described above, in the matching processing of the present embodiment, the visitor carrying the mobile terminal apparatus 30 performs the first matching processing of matching the coordinate information assigned the visit check information collected by visiting the pertinent addresses in the sequence of route numbers based on the customer route data 11b with the coordinate information on the electronic map data to associate the traveling path information 13a with the electronic map data 12a (building polygon data 12b), and then performs the second matching processing of matching the visit sequence in the visit check information of the traveling path information 13a with the route sequence in the customer route data 11b to associate with the electronic map data 12a with the customer information 11a.

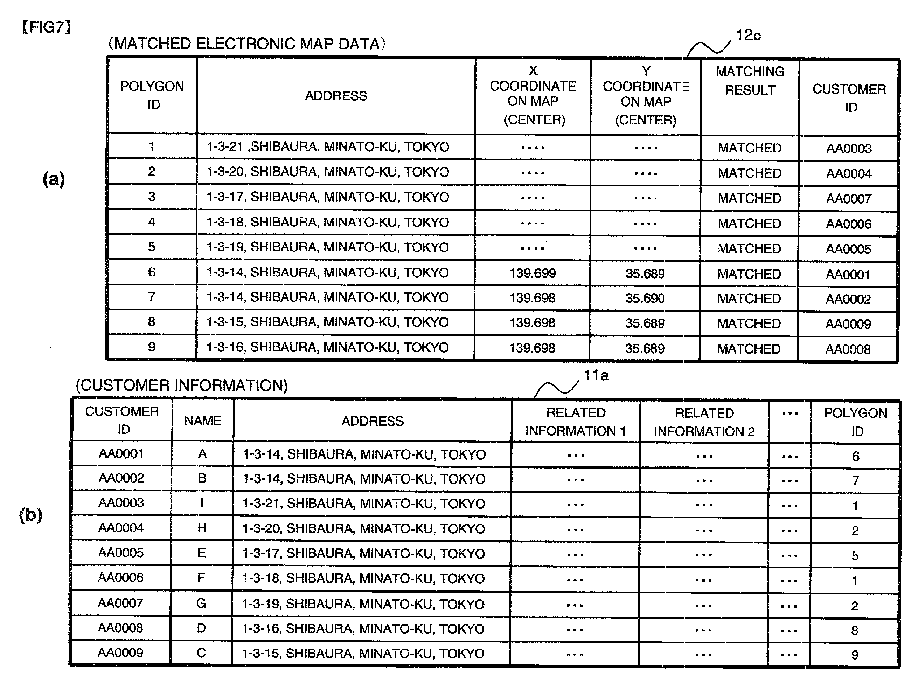

Fig. 7(a) shows an example of the matching result information after the matching processing performed by the matching control section 22 and is an example of matched electronic map data including the matching results and the customer IDs in the electronic map data 12a. Fig. 7(b) shows an example of the customer information including the polygon IDs of the electronic map data 12a in the customer information 11a. As shown in Fig. 7, the matching result information can be produced by associating the electronic map data 12a or the customer information 11a with the customer IDs or the polygon IDs. Besides those information pieces, the matching result information may be produced by associating the electronic map data 12a with the customer information 11a (for example, the matching result information having the customer IDs and the polygon IDs associated with each other).

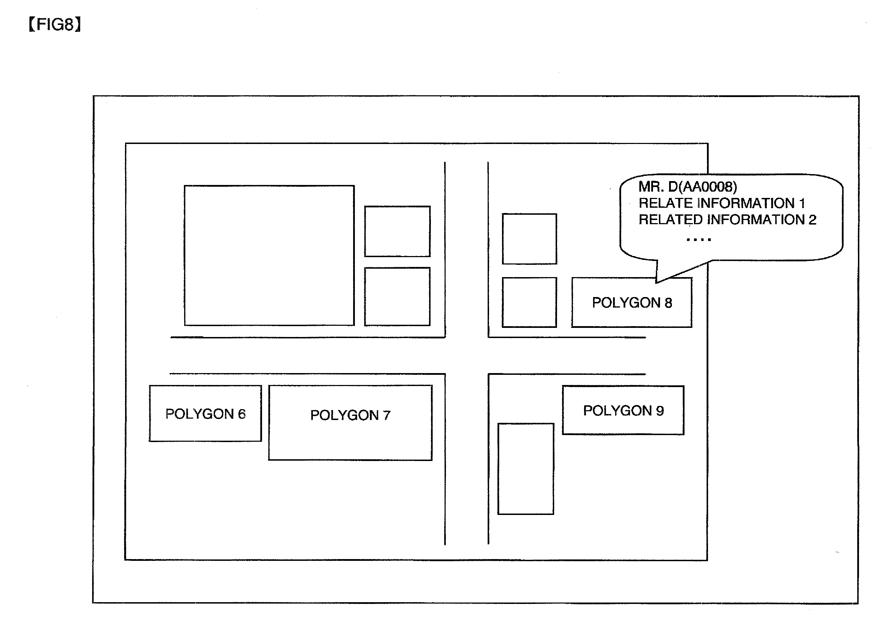

Fig. 8 shows an example of a screen on which the electronic map obtained through the GIS or the like is displayed after the association of the customer information 11a with the electronic map data 12a. As shown in Fig. 8, when a building polygon on the electronic map displayed on a predetermined display apparatus is selected, the customer information 11a associated with the selected building polygon on the electronic map can be displayed.

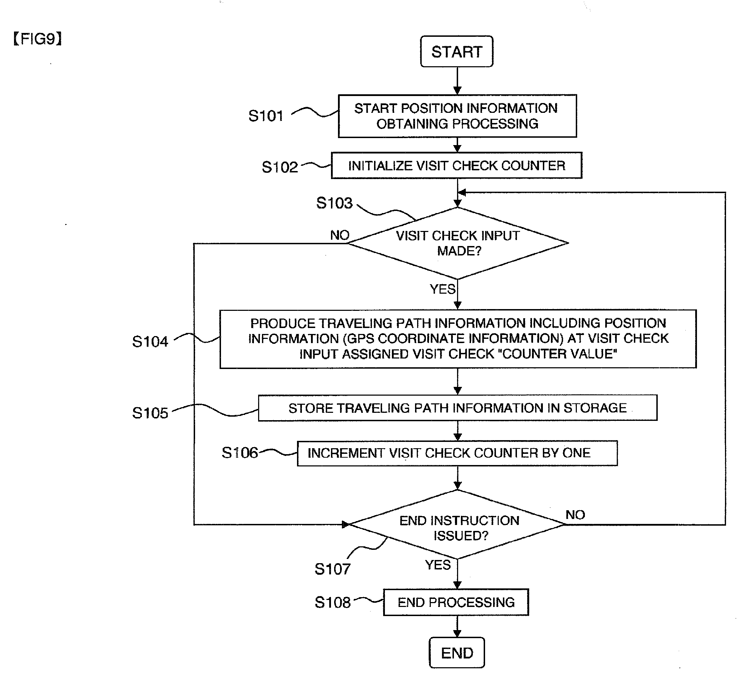

Fig. 9 shows a flow chart illustrating the processing flow in the mobile terminal apparatus 30 of the present embodiment.

As shown in Fig. 9, the visitor carries the mobile terminal apparatus 30 and visits the respective addresses in the sequence of the route numbers in the customer route data 11b. The visitor inputs an instruction to start visits to the mobile terminal apparatus 30 when starting the visits based on the customer route data 11b.

When the instruction to start visits is input through the operation input section 31, the mobile terminal apparatus 30 (GPS control section 32) executes (starts up) a visit check program. Specifically, the mobile terminal apparatus 30 starts position information obtaining processing (S101), transmits a request to obtain the position information including the identification number of the mobile terminal apparatus 30 to the GPS, and obtains the position information of the mobile terminal apparatus 30 as a receiver for the GPS. The position information is automatically and successively obtained at predetermined intervals at any time and is stored in the storage section 34 after the serial number is given to the obtained information as the sequence number on the time series. The mobile terminal apparatus 30 (visit check control section 33) initializes the counter value of the visit check information to set "one" in response to the input of the instruction to start visits (S102).

Then, the visitor visits the pertinent addresses in the sequence of the route numbers based on the customer route data 11b and performs the visit check input operation at each of the visited points. The visitor can make the visits while referencing the customer route data 11b printed on a paper medium, or the mobile terminal apparatus 30 can cause the display 35 to display the customer route data 11b in response to the instruction to start visits and the visitor can make the visits while referencing the customer route data 11b displayed in the display 35. In this case, the customer route data 11b is previously stored in the storage section 34 of the mobile terminal apparatus 30, and the visit check control section 33 reads the customer route data 11b from the storage section 34 based on the input of the instruction to start visits performed by the visitor and displays the data 11b in the display 35. Before the visitor starts the visits, the mobile terminal apparatus 30 can connect to the control apparatus 20 of the electronic map data processing system 1 through the communication channel or the communication network to cause the customer route data 11b stored in the storage apparatus 10 to be previously stored in the storage section 34 of the mobile terminal apparatus 30.

The visit check control section 33 detects the visit check input operation at the address visited by the visitor in the sequence of the route numbers in the customer route data 11b (S103), and when the visit check input operation is detected, produces the visit check information based on the counter value and produces the traveling path information 13a in which the position information of the mobile terminal apparatus 30 at the time of the visit check input operation is associated with the produced visit check information (S104). The visit check control section 33 stores the produced traveling path information 13a in the storage section 34 (S105) and increments the counter value by one (S106).

The visit check control section 33 repeatedly performs the processing from step S103 to step S106 to produce the traveling path information 13a until the visitor inputs an instruction to end the visits. Upon input of the instruction to end the visits (S107), the mobile terminal apparatus 30 performs the end processing of ending the position information obtaining processing in the GPS control section 32 to end the visit check function (S108).

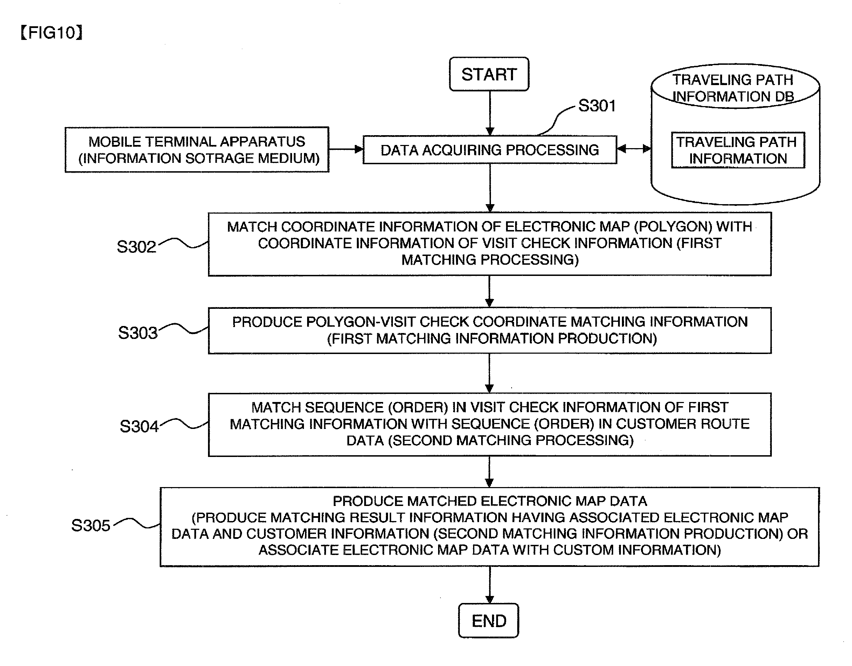

Fig. 10 shows a flow chart illustrating the processing flow in the electronic map data processing system 1 of the present embodiment.

The control apparatus 20 of the electronic map data system 1 acquires the traveling path information 13a having the position information collected by the visitor visiting the pertinent addresses in the sequence of the route numbers in the customer route data 11b and the visit check information associated with each other (S301). The visitor takes the mobile terminal apparatus 30 back to the main office or the like after the visits and connects the mobile terminal apparatus 30 to the control apparatus 20. The traveling path information processing section 21 of the control section 20 performs the data processing of acquiring the traveling path information 13a stored in the storage section 34 directly or through the mobile terminal apparatus 30 and stores the obtained information in the storage apparatus 10.

The matching control section 22 of the control apparatus 20 performs the matching processing at a predetermined performing time. First, the matching control section 22 performs the first matching processing of obtaining the electronic map data 12a, the building polygon data 12b, the customer route data 11b, and the traveling path information 13a from the storage apparatus 10, matching the coordinate information of the traveling path information 13a input through the mobile terminal apparatus 30 with the coordinate information of the building polygon in the electronic map data 12a, and producing the polygon-visit check coordinate matching information having the coordinate information assigned the visit check information and the coordinate information of the building polygon associated with each other (S302 and S303).

After the matching of the coordinate information assigned the visit check information and the building polygon, the matching control section 22 performs the second matching processing of matching the visit check information of the polygon-visit check coordinate matching information with the route number in the customer route data 11b by using the customer route data 11b and the visit check information of the traveling path information 13a (S304). The second matching processing allows the matching control section 22 to associate the customer information 11a with the polygon ID on the electronic map associated with the visit check information in the first matching processing to produce the matched electronic map data (S305).

The electronic map data processing system 1 of the present embodiment performs the matching the position information on the electronic map with the position information provided by the visitor actually visiting the pertinent addresses in the sequence of the route numbers based on the customer route data 11b having the associated customer information pieces 11a owned by the company or the like to achieve the association of the electronic map data 12a with the customer information 11a without interposing the address information.

This can prevent a reduction in the matching rate due to erroneous input of the address information caused by a human error or a mismatch of the address information and can eliminate the need of the matching processing for unmatched customer information or the cleansing processing of converting the address information pieces in the customer information 11a and the electronic map data 12a into a common address data system.

The matching processing in the electronic map data processing system 1 of the present embodiment eliminates the need to perform the information processing on the customer information 11a and the electronic map data 12a in the matching processing to significantly cut the time required for the matching processing, and includes the matching of the coordinate information on the electronic map data based on the geographically non-changing and standardized latitudes and longitudes on the map not manually operated unlike the address information and not having a plurality of information formats with the traveling path (coordinate information) of the visitor who actually visits the respective addresses of the customs to associate the electronic map data 12a with the traveling path information 13a and the matching of the visit check information in the traveling path information 13a with the customer route data 11b to achieve the association of the traveling path information 13a with the customer information 11a. This can realize the association of the customer information 11a with the electronic map data 12a (coordinate information of the map object) through the traveling path information to extremely improve the work efficiency and the matching rate.

The customer route data 11b having the customer information pieces 11a associated with each other in the predetermined sequence can be used to accurately associate the customer information 11a with the particular coordinate information in the electronic map data 12a such as the building polygon. Even for a plurality of building polygons set at the same address (such as the same address number), the matching in the route sequence of the customer route data 11b can accurately associate each customer information with each building polygon to realize the accurate matching processing.

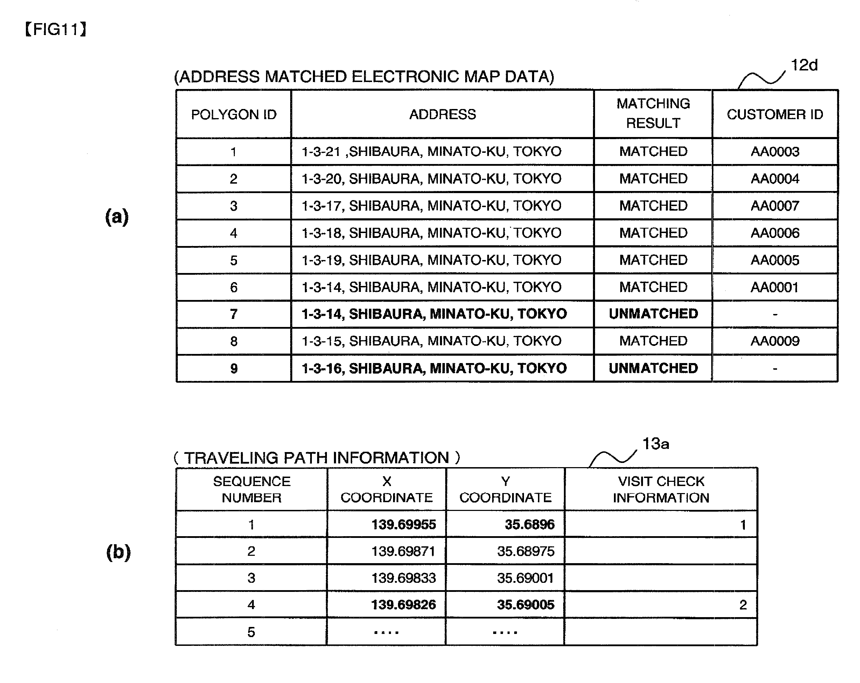

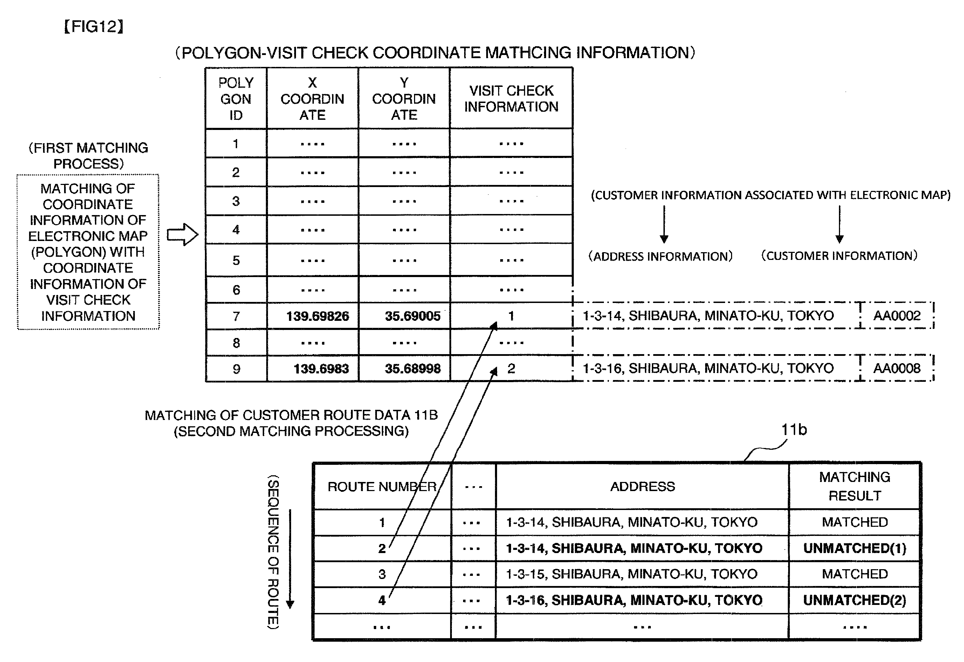

A modification of the present embodiment will be described with reference to Fig. 11 and Fig. 12. The modification is an aspect carried out when the electronic map data processing system 1 of the present embodiment is applied to unmatched data after address matching processing of matching the address information in the customer information 11a with the address information in the electronic map data 12a on a textual basis.

The present embodiment can be used as the matching processing of newly associating the customer information 11a owned by the company or the like with the coordinate information on the electronic map as described above, and can also be applied to address matched electronic map data after the cleansing processing and the address matching processing on the textual basis. For example, the matching processing of the present embodiment using the customer route data 11b and the traveling path information 13a can be performed on the unmatched data which could not be matched in the address matching processing on the textual basis, thereby achieving the association with the electronic map data 12a.

Fig. 11(a) is a table showing an example of address matched electronic map data 12d which includes matching results and customer IDs in electronic map data 12a similarly to the matched electronic map data in Fig. 7(a) and also includes electronic map data which could not be associated with customer information (the electronic map data having the matching result "unmatched"). The customer information 11a after the address matching processing also includes the customer information which could not be associated with the electronic map data 12a (the customer data having the matching result "unmatched").

In the present modification, the visitor makes visits for the unmatched data having the matching result "unmatched" in the address matched electronic map data 12d and collects the traveling path information 13a for the unmatched customer information 11a through the mobile terminal apparatus 30. Fig. 11 (b) is a table showing an example of the traveling path information 13a of the present modification. The visitor visiting the address of the unmatched data in the route sequence of the customer route data 11b performs the visit check input operation, and the mobile terminal apparatus 30 produces the traveling path information 13a which shows the position information assigned the visit check information.

The electronic map data processing system 1 performs the matching processing shown in Fig. 10 on the unmatched data having the matching result "unmatched" in the address matched electronic map data 12a.

Fig. 12 is a diagram showing an example of the matching processing in the present modification. The matching control section 22 performs the first matching processing of matching the coordinate information assigned the visit check information in the traveling path information 13a obtained from the unmatched data with the coordinate information of the building polygon to associate the coordinate information assigned with the visit check information with the polygon ID.

Then, the matching control section 22 performs the second matching processing described above. Since the traveling path information 13a is collected from the unmatched data of some of the plurality of customers included in the customer information 11a, the sequence of the visit check information in the traveling path information 13a obtained from the unmatched data is not identical to the route numbers of the customer route data 11b but identical to the route sequence provided when only the customer route data pieces 11b having the matching result "unmatched" are extracted. Thus, the unmatched results "unmatched" include "unmatched (1) " and "unmatched (2)" in this sequence in accordance with the route sequence of the customer route data 11b.

The matching control section 22 references the customer route data 11b, matches the visit check information of the polygon-visit check coordinate matching information with the route sequence provided when only the unmatched data pieces of the customer route data 11b are considered, and associates the customer information 11a with the polygon IDs in the electronic map associated with the visit check information in the first matching processing.

In this manner, the electronic map data processing system of the present embodiment can perform the electronic map data processing on the unmatched data of the address matched electronic map data 12d obtained by performing the address matching processing and can be applied as supplementary matching processing to the address matching processing.

Thus, the address matching processing can be combined with the matching processing in the present embodiment to produce the matched electronic map data with a further increased matching rate.

The electronic map data processing system 1 in the present modification can be formed as a system having an address matching processing section (which may include a cleansing processing section), or the electronic map data processing system 1 in the present modification can be applied internally or externally to a system which performs the address matching processing.

### (Second Embodiment)

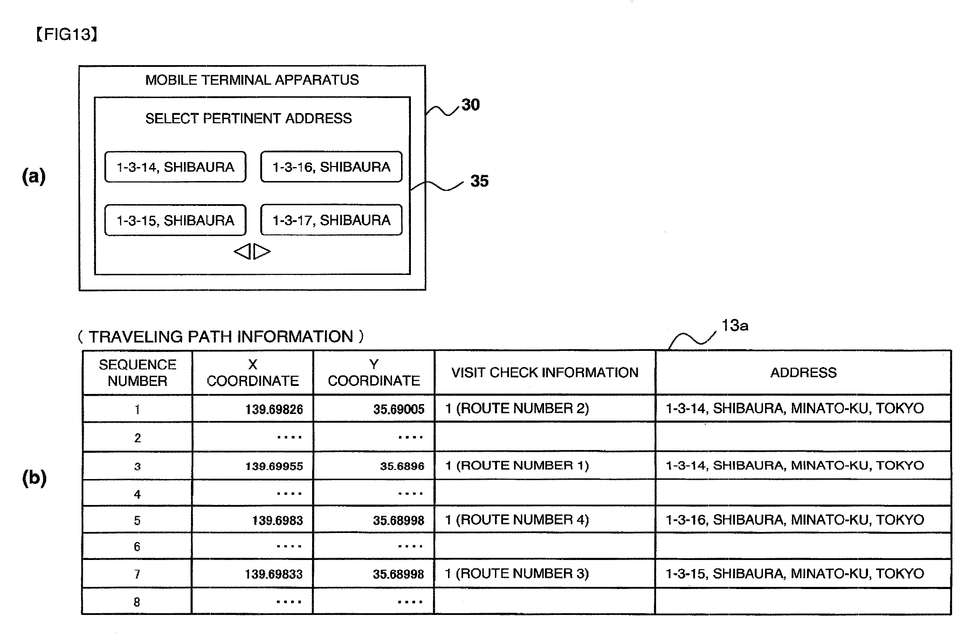

Fig. 13 to Fig. 16 are diagrams showing a second embodiment. The present embodiment includes producing traveling path information assigned not only visit check information based on a visit sequence but also address information through a mobile terminal apparatus 30 and performing matching processing by using the traveling path information including position information associated with the visit check information and the address information. The other configuration and processing are similar to those in the first embodiment described above. Description will hereinafter be made mainly of differences from the first embodiment.

Fig. 13(a) is a diagram showing an example of the address information displayed on a display 35 of the mobile terminal apparatus 30 in the present embodiment, and Fig. 13 (b) is a table showing an example of the traveling path information 13a.

The address information in customer route data 11b is stored in a storage section 34 of the mobile terminal apparatus 30, and the mobile terminal apparatus 30 reads the address information stored in the storage section 34 and displays the read address information in the display 35 as shown in Fig. 13 (a). To obtain the address information in the customer route data 11b, the mobile terminal apparatus 30 can connect to a control apparatus 20 of an electronic map data processing system 1 through a communication channel or a communication network to cause the customer route data 11b stored in a storage apparatus 10 to be previously stored in the storage section 34 of the mobile terminal apparatus 30 before a visitor starts visits. In the traveling path information 13a shown in Fig. 13(b), the sequence in the visit check information is different from the route sequence in the customer route data 11b since the visitor did not make visits in the sequence of route numbers in the customer route data 11b to perform a visit check input operation.

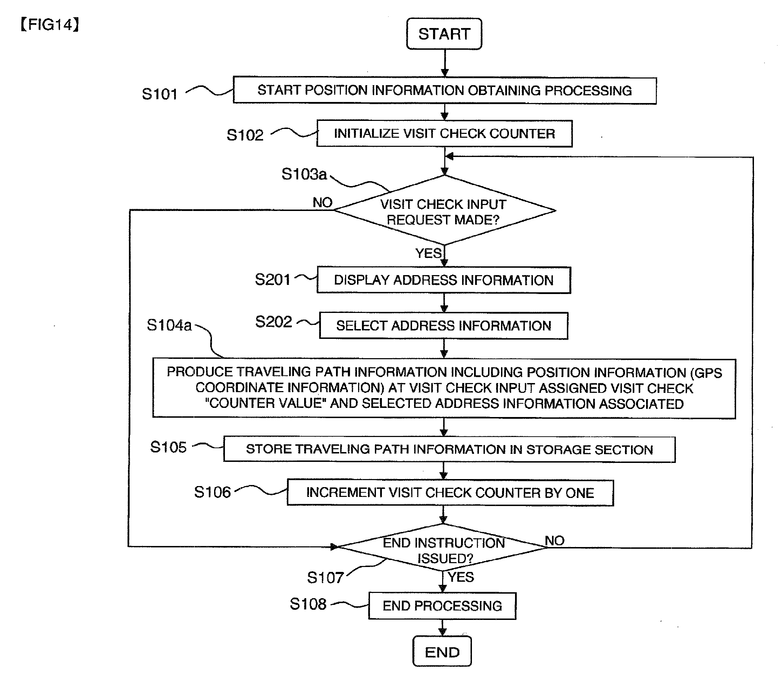

Fig. 14 shows a flow chart illustrating the processing flow in the mobile terminal apparatus 30 in the electronic map data processing system 1 of the present embodiment.

As shown in Fig. 14, the visitor carries the mobile terminal apparatus 30 and visits the respective addresses corresponding to visit destinations in the sequence of the route numbers in the customer route data 11b. The visitor inputs an instruction to start visits to the mobile terminal apparatus 30 when starting the visits based on the customer route data 11b.

When the instruction to start visits is input through an input operation section 31, the mobile terminal apparatus 30 (GPS control section 32) executes a visits check program to start position information obtaining processing (S101). The GPS control section 32 transmits a request to obtain the position information including the identification number of the mobile terminal apparatus 30 to the GPS and obtains the position information of the mobile terminal apparatus 30 as a receiver for the GPS. The obtained position information is automatically and successively obtained at predetermined intervals at any time and is stored in the storage section 34 after the serial number is given to the obtained position information as the sequence number on the time series. The mobile terminal apparatus 30 (visit check control section 33) initializes the counter value of the visit check information to set "one" in response to the input of the instruction to start visits (S102).

Then, the visitor visits the pertinent addresses in the sequence of the route numbers based on the customer route data 11b and performs the visit check input operation at each of the visited points. Upon detection of the visit check input operation at the address visited by the visitor in the sequence of the route numbers in the customer route data 11b (S103a), the visits check control section 33 reads the address information based on the customer route data 11b from the storage section 34 and displays the read address information in the display 35 (S201).

The visitor selects the address visited in the sequence of the route numbers based on the customer route data 11b from the address information pieces displayed in the display 35 (S202). When the visitor selects the address, the visit check control section 33 produces the visit check information based on the counter value and produces the traveling path information 13a having the position information of the mobile terminal apparatus 30 at the time of the visit check input operation, the produced visit check information, and the selected address information associated with each other (S104a). The visit check control section 33 stores the produced traveling path information 13a in the storage section 34 (S105) and increments the counter value by one (S106).

The visit check control section 33 repeatedly performs the processing from step S103 to step S106 to produce the traveling path information 13a until the visitor inputs an instruction to end the visits. Upon input of the instruction to end the visits (S107), the mobile terminal apparatus 30 performs the end processing of ending the position information obtaining processing in the GPS control section 32 to end the visit check function (S108).

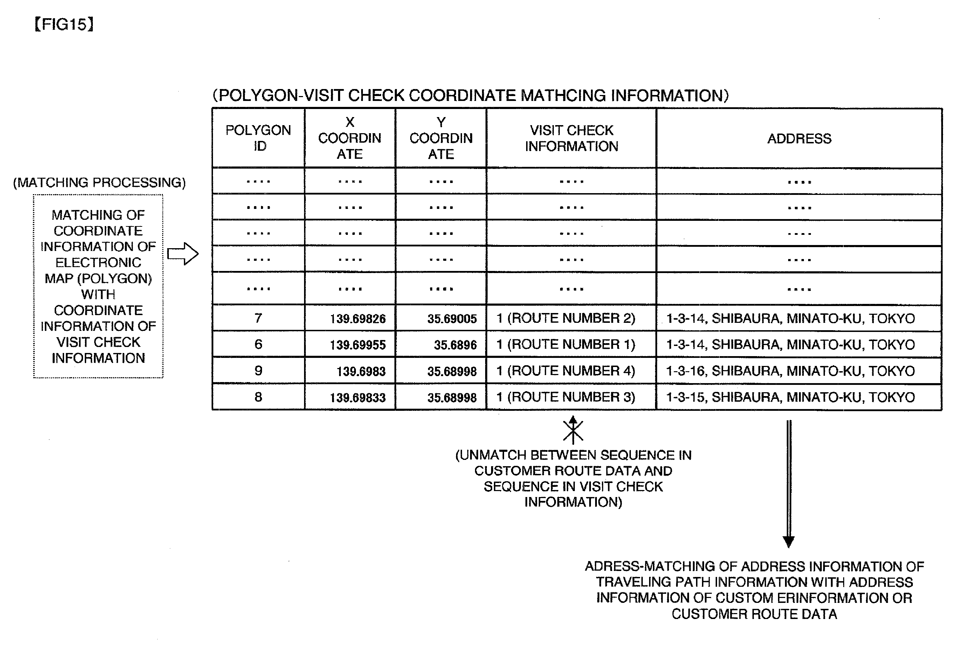

Fig. 15 is a diagram showing an example of the matching processing in the present embodiment. Similarly to the first embodiment described above, a matching control section 22 performs first matching processing of matching the coordinate information assigned the visit check information in the traveling path information 13a with the coordinate information of the building polygon to associate the coordinate information assigned the visit check information with the polygon ID.

The visit check information in the traveling path information 13a is the sequence information provided by numbering the visited addresses based on the sequence of the route numbers in the customer route data 11b, so that assuming that the route number in the customer route data 11b is identical to the visit number in the visit check information, the matching control section 22 references the customer route data 11b and performs second matching processing of matching the visit check information in polygon-visit check coordinate matching information with the route number in the customer route data 11b to associate the customer information 11a with the polygon ID on the electronic map associated with the visit check information in the first matching processing.

As shown in Fig. 13 (b), when the visitor does not make the visits in the sequence of the route numbers in the customer route data 11b to perform the visit check input operation and thus produces the traveling path information 13a including any visit mistake, the route number in the customer route data 11b is not identical to or different from the visit number in the visit check information in the visit sequence. In this case, in the second matching processing, a mismatch occurs in the association of the customer information 11a with the polygon ID on the electronic map associated with the visit check information in the first matching processing.

To address this, in the present embodiment, the matching of the visit number in the visit check information of the polygon-visit check coordinate matching information with the route number in the customer route data 11b is performed by also using the address information included in the traveling path information 13a and the address information in the customer route data 11b as the matching condition to detect any visit mistake of the visitor who did not make the visits in the route sequence in the customer route data 11b, so that erroneous association of the customer information 11a with the electronic map data 12a is prevented to realize the accurate matching processing.

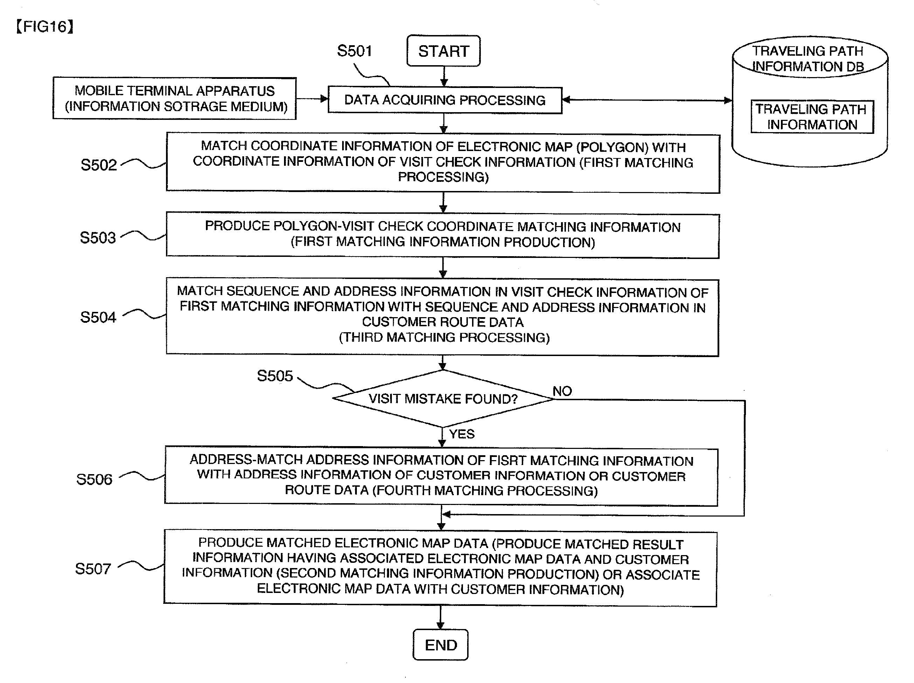

Fig. 16 shows a flow chart illustrating the processing flow in the electronic map data processing system of the present embodiment.

The control apparatus 20 of the electronic map data system 1 acquires the traveling path information 13a in which the visit check information and the selected address information are associated with the position information collected by the visitor visiting the pertinent addresses in the customer route data 11b (S501).

The matching control section 22 of the control apparatus 20 performs the matching processing at a predetermined performing time, and specifically, performs the first matching processing of obtaining the electronic map data 12a, building polygon data 12b, the customer route data 11b, and the traveling path information 13a from the storage apparatus 10, matching the coordinate information of the traveling path information 13a input through the mobile terminal apparatus 30 with the coordinate information of the building polygon in the electronic map data 12a, and producing the polygon-visit check coordinate matching information having the coordinate information assigned the visit check information and the coordinate information of the building polygon associated with each other (S502 and S503).

After the matching of the coordinate information assigned the visit check information with the building polygon, the matching control section 22 performs third matching processing of using the customer route data 11b and the visit check information and the address information in the traveling path information 13a to match the visit check information and the address information in the polygon-visit check coordinate matching information with the route number and the address information in the customer route data 11b (S504). Thematching control section 22 determines whether or not the address information in the customer route data 11b corresponding to the visit number in the visit check information of the traveling path information 13a is identical to the address information in the traveling path information 13a associated with that visit check information. The result of the determination shows a mismatch of the address information (S505), it is determined that the traveling path information includes the visit check information not produced in the sequence of the route numbers in the customer route data 11b (a visit mistake occurs).

When it is determined that the visit mistake occurs, the matching control section 22 performs fourth matching processing of address-matching the address information in the polygon-visit check coordinate matching information with the address information in the customer route data 11b (S506). The fourth matching processing allows the matching control section 22 to associate the customer information 11a with the polygon ID on the electronic map associated with the visit check information in the first matching processing to produce matched electronic map data (S507).

When it is determined at step S505 that the visit mistake occurs, the matching control section 22 can perform the processing of displaying an alarm message in a display apparatus D of the control section 20 to notify a manager or the like of the detection of the visit mistake of the visitor, for example.

In the matching processing of the present embodiment, in contrast to the first embodiment described above, the matching of the visit check information of the polygon-visit check coordinate matching information with the route number in the customer route data 11b is performed by also using the address information as the matching condition. This can detect any visit mistake of the visitor who should make visits in the route sequence in the customer route data 11b, thereby preventing erroneous association of the customer information 11a with the electronic map data 12a.

Since the address information included in the traveling path information 13a is the information selected by the visitor from the address information pieces in the customer route data 11b, the address matching of the address information in the traveling path information 13a with the address information in the customer route data 11b can realize the accurate matching even when any visit mistake causes a mismatch between the route sequence in the customer route data 11b and the sequence of the visits by the visitor. Even when the visitor makes any visit mistake or skips any visit destinations in the sequence of the route in the customer route data 11b, the customer information 11a and the electronic map data 12a can be preferably associated with each other.

While the present embodiment has been described with an example in which the address information is displayed in the display 35 of the mobile terminal apparatus 30 and the visitor selects the displayed address information, the address information may be selected (input) by reading a barcode or the like corresponding to the address information, by way of example. In this case, the mobile terminal apparatus 30 includes a read function (device) for the barcode or the like, and the read function makes conversion into the address information corresponding to the read barcode and outputs the address information to the visit check control section 33. The visit check control section 33 can use the address information read through the barcode as the selected address information to produce the traveling path information 13a in which the address information and the visit check information are associated with the position information.

In addition to the selection of the address information or the input of the address information through the reading with the barcode, the address information may be directly input on a textual basis through the input operation section 31.

According to the embodiments described above, the matching of the position information provided by the visitor actually visiting the pertinent addresses in the sequence of the route numbers in accordance with the customer route data having the associated customer information pieces owned by the company or the like with the position information on the electronic map can realize the association of the electronic map data with the customer information without interposing the address information.

This can prevent a reduction in the matching rate due to erroneous input of the address information caused by a human error or a mismatch of the address information and can eliminate the need of the matching processing for unmatched customer information or the cleansing processing of converting the address information pieces in the customer information and the electronic map data into a common address data system, thereby extremely improving the work efficiency and the matching rate.

While the customer information 11a and the customer route data 11b are formed as the separate data items in the embodiments described above, these information pieces may be formed as one data item. For the customer information having the delivery sequence in newspaper delivery or mail delivery or the visit sequence in sales activities, the customer information can be provided for each of a plurality of delivery visit areas, and the customer information can be formed for each of the plurality of areas each having the customer route data. In this case, a plurality of traveling path information pieces for the plurality of customer route data pieces 11b in those areas are produced for the mobile terminal apparatus 30 in the above embodiments, and the electronic map data processing system can perform the matching processing for each of the areas.

While the matching processing of associating the map object displayed on the electronic map obtained through the GIS or the like with the customer information owned by the company or the like is described by way of example, the present invention is not limited thereto, and particular coordinate information and customer information can be associated with each other, for example.

The electronic map data processing system 1 according to the present embodiments may be configured as a system having the storage apparatus 10 and the control apparatus 20 implemented as different server apparatuses or the like and connected through a communication channel such as a network, and may have a system configuration including the distributed processing section and storage section. The storage apparatus 10 and the control apparatus 20 according to the present embodiments may be realized by an information processing apparatus such as a single computer. In other words, the electronic map data processing apparatus may be configured to include a storage section as the storage apparatus 10 and a control section as the control apparatus 20.

In the embodiments described above, the control apparatus 20 can be implemented as a computer such as a server including a control section such as a CPU, not shown, and the control section can be provided to be responsible for the control of the overall control apparatus 20 (respective sections) to perform the functions as the processing section including obtaining various types of data from the storage apparatus 10 and outputting the data produced in the control apparatus 20 to the storage apparatus 10.

The processing in the above embodiments can be realized as a computer executable program, and a computer having the program installed thereon can operate as the information processing apparatus which performs the electronic map data processing according to the embodiments. For example, the program can be stored on an auxiliary storage apparatus, not shown, the control section such as the CPU reads the program stored in the auxiliary storage apparatus to a main storage apparatus, and the control section executes the program read to the main storage apparatus, and the computer is allowed to operate the electronic map data processing according to the embodiments.

The visit check processing in the mobile terminal apparatus 30 can be realized as a computer executable program, and the mobile terminal apparatus 30 having the program installed thereon can operate as the information processing apparatus which performs the visit check processing according to the embodiments.

The program described above may be recorded on a computer readable recording medium for use in a computer or may be downloaded to a computer through a network such as the Internet. Examples of the computer readable recording medium include an optical disk such as a CD-ROM, a phase-change optical disk such as a DVD-ROM, a magneto-optical disk such as an MO (Magnet-Optical) disk and an MD (Mini Disk), a magnetic disk such as a floppy(R) disk and a removable hard disk, and a memory card such as a CompactFlash(R) card, a smartmedia card, an SD memory card, and a memory stick. A hardware apparatus such as an integrated circuit (such as an IC chip) specially designed and configured is included in the recording medium.

While some embodiments of the present invention have been described, these embodiments are presented as examples and are not intended to limit the scope of the invention. These new embodiments can be performed in various other forms, and a variety of omissions, substitutions, and changes can be made without departing from the spirit or scope of the invention. These embodiments and their modifications are included in the spirit and scope of the invention and included in the invention described in the claims and the equivalents.

**[DESCRIPTION OF THE REFERENCE NUMERALS]**

| | |
|---|---|
| 1 | ELECTRONIC MAP DATA PROCESSING SYSTEM |
| 10 | STORAGE APPARATUS |
| 11 | COMPANY-OWNED INFORMATION DATABASE |
| 11a | CUSTOMER INFORMATION |
| 11b | CUSTOMER ROUTE DATA |
| 12 | ELECTRONIC MAP INFORMATION DATABASE |
| 12a | ELECTRONIC MAP DATA |
| 12b | BUILDING POLYGON DATA |
| 12c | MATCHED ELECTRONIC MAP DATA |
| 12d | ADDRESS MATCHED ELECTRONIC MAP DATA |
| 20 | CONTROL APPARATUS |
| 21 | TRAVELING PATH INFORMATION PROCESSING SECTION |
| 22 | MATCHING CONTROL SECTION |
| D | DISPLAY APPARATUS |
| I | OPERATION INPUT APPARATUS |
| 30 | MOBILE TERMINAL APPARATUS |
| 31 | OPERATION INPUT SECTION |
| 32 | GPS CONTROL SECTION |
| 33 | VISIT CHECK CONTROL SECTION |
| 34 | STORAGE SECTION |
| 35 | DISPLAY |

## Claims

1. An electronic map data processing system comprising:
a mobile terminal apparatus including a GPS control apparatus obtaining coordinate information of a current position, producing visit check information based on an input operation made by a user at each of visit destination points, and producing traveling path information in which the produced visit check information and coordination information of the visit destination point are associated with each other;
a storage apparatus storing route data in which pieces of address information relating to the visit destination points are associated with each other in a predetermined visit sequence and map data including coordinate information of an object displayed on a map; and
a control apparatus matching the visit check information of the traveling path information with the route data in order of the predetermined visit sequence to associate the object matched with the coordinate information of the traveling path information with the address information.

2. The electronic map data processing system according to claim 1, wherein the control apparatus performs first matching processing of matching the coordinate information of the traveling path information with the coordinate information of the object to associate the traveling path information with the map data and performs second matching processing of matching the visit check information of the traveling path information with the route data in order of the predetermined visit sequence to associate the traveling path information with the route data to associate the object with the address information.

3. The electronic map data processing system according to claim 1 or 2, wherein the mobile terminal apparatus produces the visit check information based on the input operation made by the user at each of the visit destination points, and when the use selects or inputs address information corresponding to the visit check information, produces the traveling path information in which the produced visit check information and the selected or input address information are associated with the coordinate information, and
the control apparatus performs third matching processing of matching the visit check information of the traveling path information with the route data in order of the predetermined visit sequence and matching the input address information of the traveling path information with the address information of the route data to associate the object with the address information of the route data.

4. The electronic map data processing system according to claim 3, wherein, when the matching of the visit check information of the traveling path information with the route data in order of the predetermined visit sequence results in at least one difference between the sequence in the visit check information of the traveling path information and the sequence in the route data, the control apparatus performs fourth matching processing of address-matching the input address information of the traveling path information with the address information of the route data to associate the object with the address information of the route data.

5. An electronic map data processing system comprising:
a storage section storing route data in which pieces of address information relating to a plurality of visit destination points are associated with each other in a predetermined visit sequence, traveling path information in which visit check information representing a visit sequence when the plurality of visit destination points are visited in order of the predetermined visit sequence and coordinate information based on GPS coordinate data at the visit destination points are associated with each other, and map data including coordinate information of an object displayed on a map, and
a control apparatus matching the visit check information of the traveling path information with the route data in order of the predetermined visit sequence to associate the object matched with the coordinate information of the traveling path information with the address information.

6. An electronic map data processing apparatus comprising:
a data processing section acquiring traveling path information from a mobile terminal apparatus including a GPS control apparatus obtaining coordinate information of a current position, producing visit check information based on an input operation made by a user at each of visit destination points, and producing the traveling path information in which the produced visit check information and coordination information of the visit destination point are associated with each other;
a storage section storing route data in which pieces of address information relating to the visit destination points are associated with each other in a predetermined visit sequence, the traveling path information, and map data including coordinate information of an object displayed on a map; and
a matching processing section matching the visit check information of the traveling path information with the route data in order of the predetermined visit sequence to associate the object matched with the coordinate information of the traveling path information with the address information.

7. An electronic map data processing program for causing a computer to perform:
a function of acquiring traveling path information from a mobile terminal apparatus which includes a GPS control apparatus obtaining coordinate information of a current position, produces visit check information based on an input operation made by a user at each of visit destination points, and produces the traveling path information in which the produced visit check information and coordination information of the visit destination point are associated with each other; and
a function of referencing a storage section storing route data in which pieces of address information relating to the visit destination points are associated with each other in a predetermined visit sequence, the traveling path information, and map data including coordinate information of an object displayed on a map, and matching the visit check information of the traveling path information with the route data in order of the predetermined visit sequence to associate the object matched with the coordinate information of the traveling path information with the address information.

8. A program for use in an electronic map data processing system performing processing of using route data in which pieces of address information relating to a plurality of visit destination points are associated with each other in a predetermined visit sequence, traveling path information in which visit check information representing a visit sequence when the plurality of visit destination point are visited in the predetermined visit sequence and coordinate information based on GPS coordinate data at the visit destination points are associated with each other, and map data including coordinate information of an object displayed on a map to match the visit check information of the traveling path information with the route data in order of the predetermined visit sequence to associate the object matched with the coordinate information of the traveling path information with the address information, the program being executed on a mobile terminal apparatus including a GPS control apparatus acquiring coordinate information of a current position based on the GPS coordinate data, the program being provided for causing the mobile terminal apparatus to perform:
a function of producing the visit check information based on an input operation made by a user at each of the visit destination points; and
a function of producing the traveling path information in which the produced visit check information and the coordinate information of the visit destination point are associated with each other.

9. The program according to claim 8, further comprising a function of allowing the user to select or input address information corresponding to the visit check information,
wherein the function of producing the traveling path information produces the traveling path information in which the produced visit check information and the selected or input address information are associated with the coordinate information.
